# EUROPEAN PATENT SPECIFICATION

(11) **EP 1 849 649 B1**
(45) Date of publication and mention of the grant of the patent: **11.04.2012**
(21) Application number: 06425279.4
(22) Date of filing: 26.04.2006
(51) Int. Cl.: B60N 2/28

(54) **Device for fastening a child seat to a fixed striker in a motor vehicle**
Vorrichtung für einen Kindersitz zur Befestigung an einen feststehenden Haltebolzen in einem Kraftfahrzeug
Dispositif de fixation d'un siège d'enfant sur un goujon fixé dans une voiture

(43) Date of publication of application: 31.10.2007
(73) Proprietor: SABELT S.p.A., 10129 Torino (IT)
(72) Inventor: Gastaldi, Roberto, 10143 Torino (IT)
(74) Representative: Jorio, Paolo

(56) References cited:
- EP-A- 0 943 487
- EP-A- 0 952 032
- EP-A- 1 595 736
- WO-A-03/010024
- AU-B2- 671 385

## Description

The present invention relates to a device for fastening a child seat to a fixed striker in a motor vehicle.

Some child seats, in order to be coupled to the seats of motor vehicles, comprise a fastening device having a horizontal slot adapted to be engaged in a striker pin of the standard type, commonly called "isofix" attachment, carried by the motor vehicle seats. The fastening device then comprises a lever which is turnable about a horizontal axis from a raised open position to a lowered closed position to withhold the striker pin in the aforesaid slot.

There are known fastening devices comprising a retaining member, which is capable of sliding in orthogonal direction to the axis of rotation of the lever, under the bias of a spring, from a retracted position to an advanced position, to lock the lever in its lower closed position.

In use, when the striker pin is engaged in the slot of the fastening device, the lever automatically turns towards its lower, closed position, where it is locked by said retaining member to prevent the accidental release of the striker pin. When the retaining member is retracted, by manually pulling a control wire, the lever is released and can thus turn to open position, under the bias of a further spring, to release the child seat.

For example, EP0943487 discloses a safety lock having the above described features.

A similar solution is disclosed in EP1595736, which discloses a control element connected in sliding manner to the lever and guided along a predetermined movement path. Such path includes a first section, along which the operation of the lever is prevented; and a second section, along which the operation of the lever by the control element is allowed.

AU671385 discloses a fastening device having an ejector, which ensures that the striker pin is moved outwardly of the slot when the lever is turned into its open position.

EP0952032 discloses a child safety seat comprising a base adapted to rest on a vehicle seat, a seat body mounted on the base, and a pair of releasable connectors. The connectors project from the base and have a first latch for engagement with a standard anchorage unit associated with the vehicle seat. Each connector is secured to the base by a retractable coupling member having a second latch adapted to block retraction of the coupling member when the coupling member is fully extended. The first latch of the connector is coupled to the second latch of the coupling member to allow disengagement of the second latch when the first latch is engaged with the standard anchorage unit.

WO 03 010024 A discloses a coupling that corresponds to the preamble of claim 1 and is used to attach an infant seat to a striker pin. The coupling comprises a frame having a slot configured to receive the striker pin; and a lever movably mounted on the frame by means of a hinging pin that engages, in sliding manner, a channel in the lever. The lever can turn about the hinging pin between a closed position, to hold the striker pin in the slot, and an open position, to allow access to the slot.

The coupling further comprises a stop pin to resist movement of the lever from the closed to the open position; and a manipulation surface, that can be pressed inwardly towards the slot, to make the lever rotate towards the open position.

In particular, when the manipulation surface is pressed, the stop pin moves rectilinearly to impinge upon a camming portion of the lever and therefore rotate the lever about the hinging pin upwardly, out of its closed position. As the lever turns upwardly, it also moves along the hinging pin, which reaches the end of the channel closest to the slot.

It is felt the need to improve the method and operating precision when the lever needs to turn towards its raised open position to release the child seat from the striker pin.

Preferably, it is also felt the need to simplify the solutions of the known type described above, as concerns the shape required by the various components and the number of parts.

It is the object of the present invention to make a device for fastening a child seat to a fixed striker in a motor vehicle, which allows to simply and cost-effectively solve the needs presented above.

According to the present invention, a device for fastening a child seat to a fixed striker in a motor vehicle is made, as defined in claim 1.

For a better understanding of the present invention, it will now be described a preferred embodiment only by way of non-limitative example, and with reference to the accompanying drawings, in which:
- figures 1 and 2 are a side view and upper view, respectively, of a child seat provided with a preferred embodiment of the device for fastening to a fixed striker in a motor vehicle, according to the present invention;
- figure 3 shows, in section and on a magnified scale, the device of figures 1 and 2;
- figures 4, 5 and 6 are similar to figure 3 and show a release sequence of the device in figure 3 of the fixed striker carried by a seat;
- figures 7, 8, 9 and 10 each include a side view and a front view of respective parts of the device in figures 3-6.

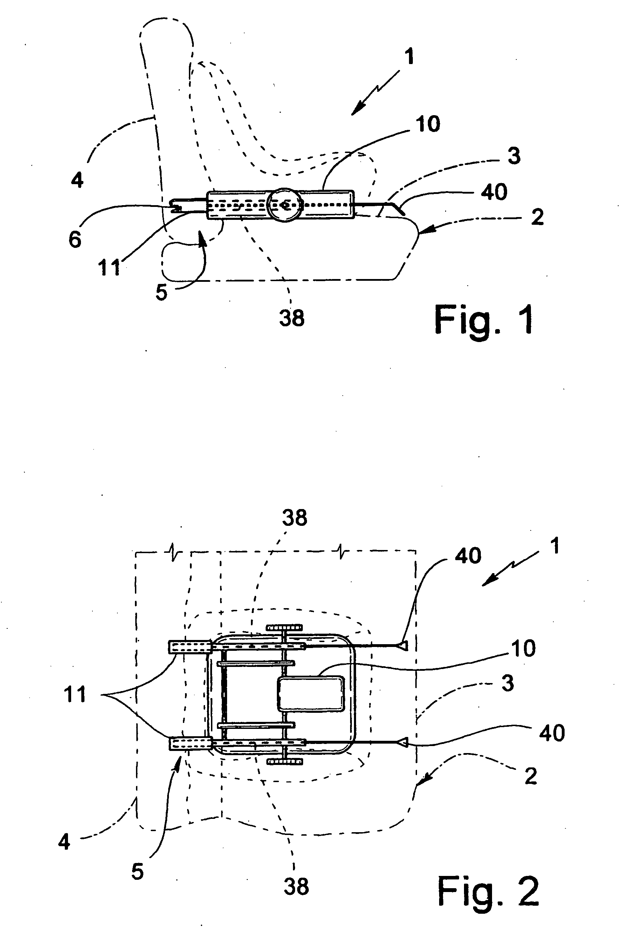

In figures 1 and 2, number 1 indicates a child seat (shown by a dotted line), which is fastened to a motor vehicle by means of a coupling system 5, so as to rest against both cushion 3 and backrest 4 of a seat 2 (shown by a dash-dotted line).

The coupling system 5 comprises a pair of horizontal striker pins 6, which are carried in fixed positions by the chassis of the motor vehicle (not shown), protrude from the opposite sides of the backrest 4, at a usual recess between cushion 3 and backrest 4, and define a standard anchoring generally called: "isofix" anchoring.

The child seat 1 comprises a seat 10, whose frame (not shown in detail) carries two fastening devices 11 forming part of the coupling system 5 and each adapted to releasably couple with a respective pin 6.

The following discussion describes only one of the devices 11, since the latter are reciprocally identical, and the various parts are indicated using terms "front", "frontal", "rear", "lateral", "vertical", "down", "up", "upper", "lower" etc, with reference to their position of use in the motor vehicle.

Device 11 comprises a frame 13 connected to the seat 10 in a way not described in detail and comprising a rear end 14 which is fork-shaped so as to define a slot 16 adapted to be engaged/disengaged by pin 6 by means of relative motion along a direction A essentially parallel to the longitudinal direction of the motor vehicle.

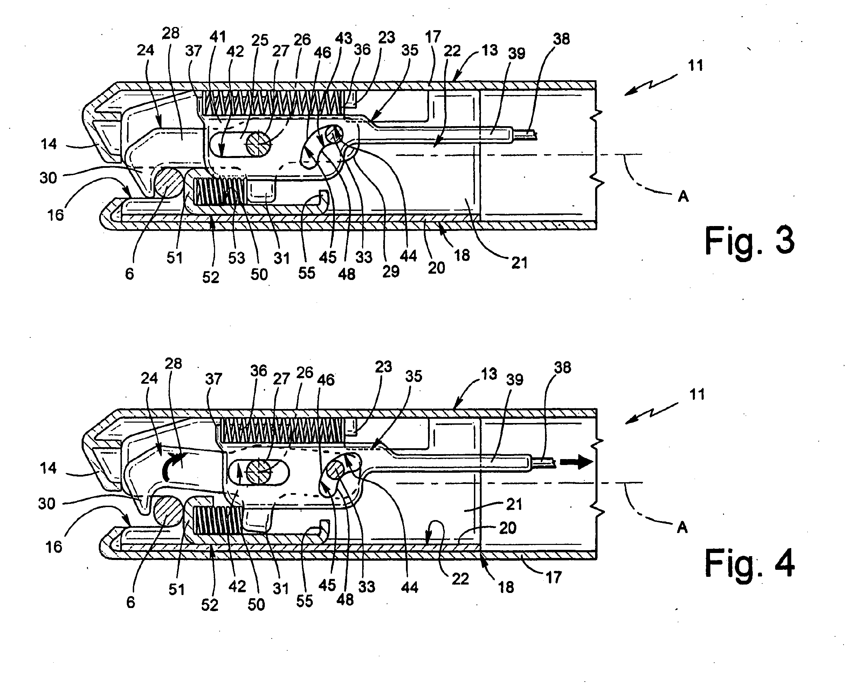

With reference to figures 3 to 7, frame 13 comprises a plastic material external casing 17 and a metallic material internal support 18, which has a U cross-section. The support 18 comprises a bottom wall 20 and two side walls 21 defining a seat 22, which accommodates a transversal tongue 23 defined by a portion folded starting from one of the two walls 21.

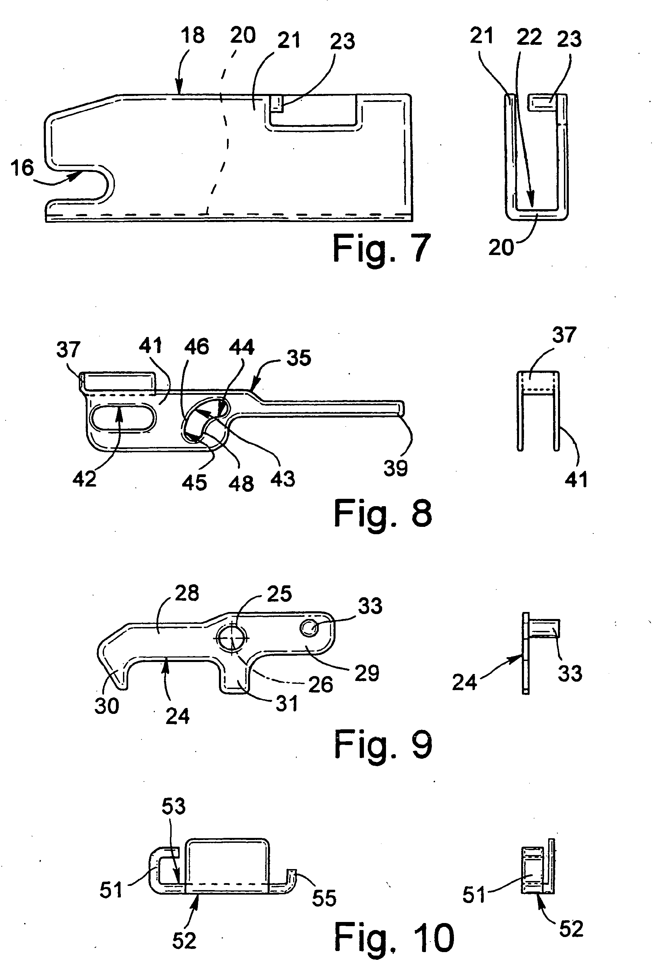

With reference to figures from 3 to 6 and to figure 9, the seat 22 accommodates a rocker lever 24, one of whose intermediate portions 25 is hinged to a pin 27 carried by support 18 in order to turn about a fixed horizontal axis 26 orthogonal to coupling direction A between slot 16 and pin 6.

The lever 24 is plate-shaped, lays on a plane orthogonal to axis 26 and comprises two diametrically and reciprocally opposite arms 28, 29: arm 28 is hook-shaped and comprises an end 30 facing one radial tooth 31, which extends downwards and integrally from portion 25, while one face of the arm 29 protrudingly carries a pin 33 fixed with respect to lever 24 and parallel to axis 26.

Lever 24 turns between a open position, in which the end 30 is raised and leaves slot 16 free for engaging/disengaging pin 6, and a closed position, in which the end 30 is lowered to close the entrance to the slot 16 and withhold pin 6 engaged in slot 16 itself.

With reference to figures from 3 to 6 and to figure 8, rotation of lever 24 is actuated by a member 35, which slides in seat 22 along direction A (i.e. in direction orthogonal to axis 26) between a retracted position and an advanced position with respect to slot 16. Member 35 is normally pushed towards the advanced position, or rear end-of-stroke position, by a spring 36 interposed between tongue 23 and an upper portion 37 of member 35; at the same time, member 35 may be pulled towards the retracted position, or front end-of-stroke position, by means of a transmission wire 38, which is fixed, on one end, to a frontal end portion 39 of member 35 and, on the opposite end, to a manually actuated control member 40 (figures 1 and 2) .

Member 35 comprises a rear portion 41 which, in cross-section, is U-shaped, arranged astride of lever 24, and defines a straight slot 42 and an elbow slot 43.

Slot 42 is defined by a closed contour, extends parallelly to direction A, and is slidingly engaged by pin 27, which therefore guides sliding of member 35. Slot 43 instead is made in front of slot 42, also defined by a closed contour, is slidingly engaged by pin 33, and comprises a front angular retention segment 44, essentially parallel to direction A, and a rear cam transmission segment 45, which is slanted with respect to direction A and is jointed to segment 44.

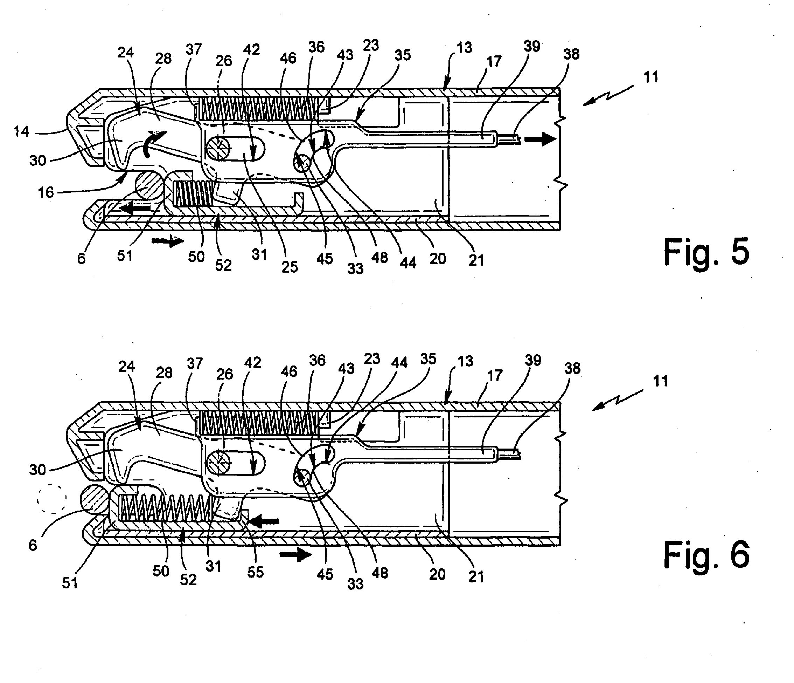

In particular, segment 45 has an upper edge 46, which pushes pin 33 downwards and, therefore, turnably pushes lever 24 about axis 26 towards open position, when member 35 runs its retraction stroke towards the front end-of-stroke position against the bias of spring 36 (fig. 5). Segment 45 has a lower edge 48, which pushes pin 33 upwards during the advancement stroke of member 35 caused by spring 36 towards the rear end-of-stroke position.

Lever 24 is rotationally pushed towards closed position not only by the lower edge 48, but also by the elastic action of a spring 50, which is interposed between tooth 31 and end wall 51 of a drawer 52.

With reference to figures 5 and 6, drawer 52 defines a seat 53 accommodating spring 50, is arranged in contact with wall 20 and slides parallel to direction A between a first position, in which wall 51 obstructs the entrance of slot 16, and a second portion, in which wall 51 further compresses spring 50 and leaves slot 16 free.

The compression of spring 50 tends to displace drawer 52 towards its first position and facilitate release of pin 6 from slot 16 when lever 24 is turned to open position by effect of the traction on wire 38. Once wire 38 is released, the end 30 is abuttingly arranged against wall 51, and remains blocked by wall 51 in open position. In this condition, member 35 remains in retracted position, even if wire 38 is not pulled and spring 36 exerts an elastic bias (fig. 6), thanks to pin 33 which defines a fixed rest for the contour of slot 43.

Drawer 52 then comprises an appendix 55, which is arranged on the opposite end with respect to that of wall 51 and abuts against tooth 31 to define the end-of-stroke when drawer 52 reaches its first position.

To fasten child seat 1 to the motor vehicle, device 11 is fastened to the respective pin 6, by inserting device 11 itself, along direction A, into a blank groove made in the backrest 4 of seat 2.

During the relative motion between pin 6 and device 11, pin 6 abuts against wall 51 (fig. 6) and pushes drawer 52 towards its second position, against the bias of spring 50. Wall 51, while retracting, leaves the entrance to slot 16 free and is removed from end 30, thus leaving lever 24 free to turn towards the closed position. Such rotation is caused by the torque resulting from the combined push of springs 36 and 50: spring 50 directly acts on tooth 31 of lever 24, while spring 36 acts on member 35 which, while shifting, rotationally pushes lever 24 by means of the lower edge 48 of slot 43.

When lever 24 reaches closed position, pin 6 remains locked at the bottom of slot 16 by end 30. After this, member 35 continues to be shifted by a further segment of stroke to its advanced position towards slot 16 under the bias of spring 36, thus making pin 33 slide in segment 44 to the bottom of slot 43.

In this operating condition (figure 3), if the motor vehicle is involved in an accident, the rotation of lever 24 and, therefore, the accidental release of pin 6, are prevented by the opposition defined by the lower edge of segment 44 on pin 33 in tangential direction.

To release device 11 from pin 6, only a traction on wire 38 against the bias of spring 36 may cause the release of pin 33 from segment 44, subsequently turning lever 24 towards the open position. In other words, by pulling wire 38, in a first segment of the retraction stroke of member 35, lever 24 is released (figure 4); then in a second segment of the retracting stroke, lever 24 is turned to open position by the upper edge 46 (figure 5).

During rotation of lever 24 towards open position, spring 50 is further compressed by tooth 31. At the end of the lever rotation 24, the bias of spring 50, which acts on wall 51, facilitates the ejection of pin 6 from slot 16 and, therefore, the release of device 11 (figure 6) .

From the above, it is evident that the operation of device 11 is precise during release, regardless of the preloads imposed on the springs, because the upper edge 46, during the retraction stroke of member 35, cooperates with pin 33 and rotationally pushes lever 24 towards the open position.

Device 11 is then extremely safe against accidental release, thanks to the horizontal abutment defined by the lower edge of segment 44.

The coupling between slot 43 and pin 33 provides a simple solution with a relatively low number of parts, and the shape of such parts is relatively simple. The guiding function of pin 27 on member 35 increases the simplicity of device 11.

The fact that spring 50 directly acts on lever 24 makes the closing rotation of lever 24 prompt, while drawer 52 facilitates engagement and disengagement of pin 6 in slot 16.

Furthermore, used springs 36, 50 normally push lever 24 towards closed position, and not towards open position, making the overall operation of device 11 more accurate and safe.

It is finally apparent that changes and variations can be made to device 11 here described and illustrated without however departing from the scope of protection of the present invention, as defined in the accompanying claims.

In particular, coupling and motion transmission between lever 24 and member 35 could be defined by portions or cams having different shape from those described and illustrated; and/or drawer 52 and spring 50 may either have a different shape from that shown; and/or slot 43 could be without segment 44 and the anti-release safety function could be performed by a portion of frame 13: in the latter case, spring 36 could possibly act directly on lever 24, considering that there is a two-way relationship between the positions assumed by member 35 and lever 24 when pin 33 slides in segment 45 and in slot 43.

## Claims

1. A device (11) for fastening a child seat (1) to a fixed striker (6) in a motor vehicle; the device comprising:
- a frame (13) defining a slot (16) adapted to be engaged by said striker (6);
- a lever (24) turnable about a fixed axis of rotation (26) with respect to said frame (13) between an open position, in which said slot (16) is left free to be engaged/disengaged by said striker (6), and a closed position, in which said lever closes said slot (16) to withhold said striker (6);
- a control member (35) sliding with respect to said frame (13) along a direction (A) orthogonal to said axis of rotation (26) between an advanced position and a retracted position with respect to said slot (16); said control member (35) comprising a coupling portion (46) which, during the retraction stroke of said control member (35), cooperates with an abutment portion (33) of said lever (24) and rotationally pushes said lever (24) towards said open position;
**characterised by** further comprising a drawer (52) sliding with respect to said frame (13) between a first position, in which it obstructs the entrance to said slot (16) and defines an abutment for an end (30) of said lever (24) to withhold said lever (24) in open position, and a second position, in which it leaves the entrance to said slot (16) free and is removed from said send (30), thus leaving said lever (24) free to turn towards the closed position.

2. A device according to claim 1, **characterised in that** said control member (35) comprises a retaining portion (44) which locks said lever (24) in closed position when it is arranged in its advanced position.

3. A device according to claim 1 or 2, **characterised by** comprising:
- a slot (43) carried by either said lever (24) or said control member (35), and
- a pin (33) slidingly coupled to said slot (43) and carried by the other of said lever (24) and said control member (35).

4. A device according to claim 3, **characterised in that** said slot (43) is made in said control member (35), and that said pin (33) is integral with an arm (29) of said lever (24).

5. A device according to claim 3 or 4, **characterised in that** said slot (43) comprises:
- a first segment (45) which, during the retraction stroke of said control member (35), cooperates with said pin (33) and rotationally pushes lever (24) towards said open position;
- a second segment (44) which locks said lever (24) in closed position when said control member (35) is arranged in advanced position.

6. A device according to any of the preceding claims, **characterised by** comprising biasing means (36,50) exerting an elastic action to push said lever (24) towards said closed position.

7. A device according to claim 6, **characterised in that** said biasing means comprises a spring (36) interposed between said control member (35) and said frame (13).

8. A device according to any of the preceding claims, **characterised by** comprising a transmission wire (38), one of whose ends is fixed to an end portion (39) of said control member (35) to pull said control member towards said retracted position.

9. A device according to any of the preceding claims, **characterised by** comprising a pin (27) for hinging said lever (24) to said frame (13), and that said control member (35) is guided between its retracted and advanced positions by said hinging pin (27).

10. A device according to claim 6, **characterised in that** said biasing means comprises a spring (50) which exerts the elastic action directly on said lever (24).

11. A device according to anyone of the previous claims, **characterised in that** said drawer (52) is movable parallelly to the sliding direction (A) of said control member (35).

12. A device according to anyone of the previous claims, **characterised by** comprising an elastic member (50) which exerts a biasing action on said drawer (52) towards said first position.

13. A device according to claim 12, **characterised in that** said elastic member is interposed between said drawer (52) and a radial tooth (31) of said lever (24).

14. A device according to claim 13, **characterised in that** said drawer (52) comprises an appendix (55) adapted to abut against said radial tooth (31) when said drawer (52) reaches said first position.

## Patentansprüche

1. Vorrichtung (11) zum Befestigen eines Kindersitzes (1) an einem fixierten bzw.
feststehenden Schließbolzen bzw. Verriegelungsstück (6) in einem Kraftfahrzeug; wobei die Vorrichtung umfasst:
- einen Rahmen (13), der einen Schlitz (16) definiert, der angepasst ist, von dem Schließbolzen bzw. Verriegelungsstück (6) in Eingriff genommen zu werden;
- einen Hebel (24), der um eine fixierte bzw. feststehende Drehachse (26) bezüglich des Rahmens (13) zwischen einer offenen Position, in welcher der Schlitz (16) freigelassen ist, um von dem Schließbolzen bzw. Verriegelungsstück (6) in/außer Eingriff genommen zu werden, und einer geschlossenen Position drehbar ist, in welcher der Hebel den Schlitz (16) verschließt, um den Schließbolzen bzw. Verriegelungsstück (6) zurückzuhalten;
- ein Kontroll- bzw. Steuer- bzw. Regelglied (35), das bezüglich des Rahmens (13) entlang einer Richtung (A) orthogonal zu der Drehachse (26) zwischen einer vorgerückten Position und einer zurückgezogenen Position bezüglich des Schlitzes (16) gleitet; wobei das Kontroll- bzw. Steuer- bzw. Regelglied (35) einen Kopplungsabschnitt (46) umfasst, der während des Zurückziehhubs des Kontroll- bzw. Steuer- bzw. Regelglieds (35) mit einem Anlageabschnitt (33) des Hebels (24) kooperiert bzw. zusammenwirkt und den Hebel (24) drehmäßig zu der offenen Position hin drückt;
**gekennzeichnet durch** das weitere Umfassen eines Ziehers bzw. Einschubs (52), der bezüglich des Rahmens (13) zwischen einer ersten Position, in der er den Eingang zu dem Schlitz (16) versperrt und eine Anlage für ein Ende (30) des Hebels (24) zum Zurückhalten des Hebels (24) in der offenen Position definiert, und einer zweiten Position gleitet, in der er den Eingang zu dem Schlitz (16) frei lässt und von dem Ende (30) entfernt ist, wodurch der Hebel (24) freigelassen wird, um sich zu der geschlossenen Position hin zu drehen.

2. Vorrichtung nach Anspruch 1, **dadurch gekennzeichnet, dass** das Kontroll- bzw. Steuer- bzw. Regelglied (35) einen Rückhalteabschnitt (44) umfasst, der den Hebel (24) in der geschlossenen Position verriegelt, wenn er in seiner vorgerückten Position angeordnet ist.

3. Vorrichtung nach Anspruch 1 oder 2, **gekennzeichnet durch** das Umfassen:
- eines Schlitzes (43), der entweder von dem Hebel (24) oder dem Kontroll- bzw. Steuer- bzw. Regelglied (35) getragen wird, und
- eines Stifts (33), der gleitbar bzw. verschiebbar mit dem Schlitz (43) gekoppelt ist und von dem anderen des Hebels (24) und des Kontroll- bzw. Steuer- bzw. Regelglieds (35) getragen wird.

4. Vorrichtung nach Anspruch 3, **dadurch gekennzeichnet, dass** der Schlitz (43) in dem Kontroll- bzw. Steuer- bzw. Regelglied (35) gemacht ist und dass der Stift (33) integral bzw. einstückig mit einem Arm (29) des Hebels (24) ist.

5. Vorrichtung nach Anspruch 3 oder 4, **dadurch gekennzeichnet, dass** der Schlitz (43) umfasst:
- ein erstes Segment (45), das während des Zurückziehhubs des Kontroll- bzw. Steuer- bzw. Regelglieds (35) mit dem Stift (33) kooperiert bzw. zusammenwirkt und den Hebel (24) drehmäßig zu der offenen Position hin drückt;
- ein zweites Segment (44), das den Hebel (24) in der geschlossenen Position verriegelt, wenn das Kontroll- bzw. Steuer- bzw. Regelglied (35) in der vorgerückten Position angeordnet ist.

6. Vorrichtung nach einem der vorhergehenden Ansprüche, **gekennzeichnet durch** das Umfassen von Vorspannmitteln (36, 50), die eine elastische Wirkung bzw. Aktion ausüben, um den Hebel (24) zu der geschlossenen Position hin zu drücken.

7. Vorrichtung nach Anspruch 6, **dadurch gekennzeichnet, dass** das Vorspannmittel eine Feder (36) umfasst, die zwischen dem Kontroll- bzw. Steuer- bzw. Regelglied (35) und dem Rahmen (13) angeordnet ist.

8. Vorrichtung nach einem der vorhergehenden Ansprüche, **gekennzeichnet durch** das Umfassen eines Transmissions- bzw. Übertragungsdrahts (38), von dem ein Ende an einem Endabschnitt (39) des Kontroll- bzw. Steuer- bzw. Regelglieds (35) fixiert bzw. befestigt ist, um das Kontroll- bzw. Steuer- bzw. Regelglied zu der zurückgezogenen Position hin zu ziehen.

9. Vorrichtung nach einem der vorhergehenden Ansprüche, **gekennzeichnet durch** das Umfassen eines Stifts (27) zum drehbaren Befestigen bzw. Anlenken des Hebels (24) an dem Rahmen (13), und **dadurch**, dass das Kontroll- bzw. Steuer- bzw. Regelglied (35) zwischen seiner zurückgezogenen und vorgerückten Position **durch** den Befestigungs- bzw. Anlenkungsstift (27) geführt ist.

10. Vorrichtung nach Anspruch 6, **dadurch gekennzeichnet, dass** das Vorspannmittel eine Feder (50) umfasst, die eine elastische Wirkung bzw. Aktion direkt auf den Hebel (24) ausübt.

11. Vorrichtung nach einem der vorhergehenden Ansprüche, **dadurch gekennzeichnet, dass** der Zieher bzw. Einschub (52) parallel zu der Gleitrichtung (A) des Kontroll- bzw. Steuer- bzw. Regelglieds (35) beweglich bzw. bewegbar ist.

12. Vorrichtung nach einem der vorhergehenden Ansprüche, **gekennzeichnet durch** das Umfassen eines elastischen Glieds (50), das eine Vorspannwirkung bzw. -aktion auf den Zieher bzw. Einschub (52) zu der ersten Position hin ausübt.

13. Vorrichtung nach Anspruch 12, **dadurch gekennzeichnet, dass** das elastische Glied zwischen dem Zieher bzw. Einschub (52) und einem radialen Zahn (31) des Hebels (24) angeordnet ist.

14. Vorrichtung nach Anspruch 13, **dadurch gekennzeichnet, dass** der Zieher bzw. Einschub (52) einen Anhang (55) umfasst, der angepasst ist, gegen den radialen Zahn (31) anzustoßen bzw. anzuliegen, wenn der Zieher bzw. Einschub (52) die erste Position erreicht.

## Revendications

1. Dispositif (11) de fixation d'un siège enfant (1) à un goujon fixe (6) dans un véhicule motorisé ; le dispositif comprenant :
- un cadre (13) définissant une fente (16) adaptée pour être engagée par ledit goujon (6) ;
- un levier (24) pouvant être tourné autour d'un axe fixe de rotation (26) par rapport audit cadre (13) entre une position ouverte, dans laquelle ladite fente (16) est laissée libre d'engagement/désengagement par ledit goujon (6), et une position fermée, dans laquelle ledit levier ferme ladite fente (16) pour retenir ledit goujon (6) ;
- un organe de commande (35) glissant par rapport audit cadre (13) le long d'une direction (A) orthogonale audit axe de rotation (26) entre une position avancée et une position rétractée par rapport à ladite fente (16) ; ledit organe de commande (35) comprenant une portion d'accouplement (46) qui, pendant la course de rétraction dudit organe de commande (35), coopère avec une portion de butée (33) dudit levier (24) et pousse ledit levier (24) par rotation vers ladite position ouverte ;
**caractérisé en ce qu'**il comprend en outre un tiroir (52) glissant par rapport audit cadre (13) entre une première position, dans laquelle il obstrue l'entrée à ladite fente (16) et définit une butée pour une extrémité (30) dudit levier (24) afin de maintenir ledit levier (24) en position ouverte, et une seconde position, dans laquelle il laisse l'entrée à ladite fente (16) libre et est retiré de ladite extrémité (30), laissant ainsi ledit levier (24) libre de tourner vers la position fermée.

2. Dispositif selon la revendication 1, **caractérisé en ce que** ledit organe de commande (35) comprend une portion de retenue (44) qui verrouille ledit levier (24) en position fermée lorsqu'il est agencé dans sa portion avancée.

3. Dispositif selon la revendication 1 ou 2, **caractérisé en ce qu'**il comprend :
- une fente (43) portée soit par ledit levier (24), soit par ledit organe de commande (35) ; et
- une broche (33) couplée avec faculté de glissement à ladite fente (43) et portée par l'autre dudit levier (24) et dudit organe de commande (35).

4. Dispositif selon la revendication 3, **caractérisé en ce que** ladite fente (43) est réalisée dans ledit organe de commande (35), et **en ce que** ladite broche (33) est solidaire avec un bras (29) dudit levier (24).

5. Dispositif selon la revendication 3 ou 4, **caractérisé en ce que** ladite fente (43) comprend :
- un premier segment (45) qui, pendant la course de rétraction dudit organe de commande (35), coopère avec ladite broche (33) et pousse le levier (24) par rotation vers ladite position ouverte ;
- un second segment (44) qui verrouille ledit levier (24) en position fermée lorsque ledit organe de commande (35) est agencé en position avancée.

6. Dispositif selon l'une quelconque des revendications précédentes, **caractérisé en ce qu'**il comprend un moyen de sollicitation (36, 50) exerçant une action élastique afin de pousser ledit levier (24) vers ladite position fermée.

7. Dispositif selon la revendication 6, **caractérisé en ce que** ledit moyen de sollicitation comprend un ressort (36) interposé entre ledit organe de commande (35) et ledit cadre (13).

8. Dispositif selon l'une quelconque des revendications précédentes, **caractérisé en ce qu'**il comprend un câble de transmission (38), dont l'une des extrémités est fixée à une portion d'extrémité (39) dudit organe de commande (35) afin de tirer ledit organe de commande vers ladite position rétractée.

9. Dispositif selon l'une quelconque des revendications précédentes, **caractérisé en ce qu'**il comprend une broche (27) permettant d'articuler ledit levier (24) sur ledit cadre (13), et **en ce que** ledit organe de commande (35) est guidé entre ses positions rétractée et avancée par ladite broche d'articulation (27).

10. Dispositif selon la revendication 6, **caractérisé en ce que** ledit moyen de sollicitation comprend un ressort (50) qui exerce l'action élastique directement sur ledit levier (24).

11. Dispositif selon l'une quelconque des revendications précédentes, **caractérisé en ce que** ledit tiroir (52) est mobile de façon parallèle à la direction de glissement (A) dudit organe de commande (35).

12. Dispositif selon l'une quelconque des revendications précédentes, **caractérisé en ce qu'**il comprend un organe élastique (50) qui exerce une action de sollicitation sur ledit tiroir (52) vers ladite première position.

13. Dispositif selon la revendication 12, **caractérisé en ce que** ledit organe élastique est interposé entre ledit tiroir (52) et une dent radiale (31) dudit levier (24).

14. Dispositif selon la revendication 13, **caractérisé en ce que** ledit tiroir (52) comprend un appendice (55) adapté pour venir en butée contre ladite dent radiale (31) lorsque ledit tiroir (52) atteint ladite première position.
